# EUROPÄISCHE PATENTANMELDUNG

(11) **EP 2 378 221 A2**
(43) Veröffentlichungstag der Anmeldung: **19.10.2011**
(21) Anmeldenummer: 11162348.4
(22) Anmeldetag: 14.04.2011
(51) Int. Cl.: F24J 2/52, H01L 31/042

(54) **Montagesystem für Solarmodule und Verfahren zur Montage einer Solaranlage**

(30) Priorität: 19.04.2010 DE 102010016529
(71) Anmelder: SCHÜCO International KG, 33609 Bielefeld (DE)
(72) Erfinder: Ritzler, Ralf, 33607 Bielefeld (DE); Salzer, Wadim, 33729 Bielefeld (DE); Rosenwirth, Andreas, 32130 Enger (DE); Imkamp, Gerd, 33334 Gütersloh (DE); Stockhausen, Andre, 32052 Herford (DE); Hanke, Carsten, 33729 Bielefeld (DE)
(74) Vertreter: Dantz, Jan Henning

(57) **Zusammenfassung**

Ein Montagesystem (1) für Solarmodule (6) umfasst ein Bodenteil (11), an dem ein Gestell (2) abgestützt ist, auf dem ein oder mehrere plattenförmige Solarmodule (6) gehalten sind, und einen Anker (13, 35), der an einer Wand (17) eines Gebäudes festlegbar ist und das Gestell (2) in einem oberen Bereich abstützt, wobei das Bodenteil (11) um eine horizontale Achse (10) drehbar gelagert ist. Ferner betrifft die Erfindung ein Verfahren zur Montage einer Solaranlage.

## Beschreibung

Die vorliegende Erfindung betrifft ein Montagesystem für Solarmodule, mit einer Unterkonstruktion, an der ein Gestell abgestützt ist, auf den ein oder mehrere plattenförmige Solarmodule gehalten sind, und einem Anker, der an einem Bauwerk festlegbar ist und das Gestell in einem oberen Bereich abstützt, sowie ein Verfahren zur Montage einer Solaranlage.

Es sind Montagesysteme für Solarmodule bekannt, bei denen ein Gestell auf einer Unterkonstruktion, z. B. Rammpfosten, abgestützt ist. Das Gestell wird dabei in einem vorbestimmten Neigungswinkel entweder auf mehreren die Unterkonstruktion bildenden Pfosten montiert, wobei vordere kurze Pfosten zur Südseite und hintere längere Pfosten zur Nordseite angeordnet sind, oder auf nur einem Pfosten, wobei das Gestell in etwa im Mittelpunkt getragen wird, so dass eine gleichmäßige Lastabtragung gegeben ist. Diese Montagesysteme können auf oder an Gebäuden angeordnet sein oder auf Freilandflächen. Nachteilig ist, dass neben dem Gestell relativ aufwendige und teuere Unterkonstruktionen bereitgestellt werden müssen. Insbesondere bei sehr großen Solaranlagen ist die Montage schwierig und aufwendig.

Des Weiteren sind fassadenintegrierte Montagesysteme für Solarmodule bekannt, die einen Teil der Gebäudehülle bilden. Hierbei haben die Systeme neben den reinen Haltefunktionen auch noch weitere Aufgaben zu erfüllen, wie z. B. Wärmeisolation und/oder das Bereitstellen einer dichten Fassade bzw. eines dichten Fassadenabschnittes. Nachteilig ist hierbei, dass eine Nachrüstung an der Gebäudehülle nicht möglich ist bzw. nur mit erheblichem Aufwand betrieben werden kann.

Es ist daher Aufgabe der vorliegenden Erfindung, ein Montagesystem für Solarmodule sowie ein Verfahren zur Montage einer Solaranlage zu schaffen, die flexibel an die örtlichen Gegebenheiten angepasst werden können und eine einfache Montage ermöglichen. Zudem soll das Montagesystem auch zur Nachrüstung an Gebäuden geeignet sein.

Zur Lösung dieser Aufgabe wird ein Montagesystem mit den Merkmalen des Anspruches 1 sowie ein Verfahren zur Montage einer Solaranlage mit den Merkmalen des Anspruches 7 bereitgestellt.

Erfindungsgemäß ist bei dem Montagesystem das Bodenteil um eine horizontale Achse drehbar gelagert und das Gestell ist in unterschiedlichen Neigungswinkeln fixierbar. Dadurch kann auf einfache Weise eine Vormontage der Solaranlage am Boden erfolgen, um dann das Bodenteil zusammen mit dem Gestell und den Solarmodulen aufzurichten und an einem Bauwerk oder anderen Element festzulegen. Dadurch können auch große Flächen effektiv montiert werden. Zudem ist es möglich, durch die verschwenkbare Lagerung eine Neigungsverstellung vorzunehmen, beispielsweise um die Sofarmodule je nach Jahreszeit optimiert auszurichten. In den Wintermonaten steht die Sonne weniger hoch, so dass eine steilere Ausrichtung der Solarmodule vorteilhaft ist. Während der Sommermonate hingegen kann eine flachere Ausrichtung der Solarmodule den Wirkungsgrad erhöhen. Die Neigungsverstellung kann auch nach der ersten Montage erfolgen.

In einer vorteilhaften Ausgestaltung werden die auftretenden Gewichtslasten durch die Unterkonstruktion abgetragen, während Kräfte durch Windlasten von dem Anker aufgenommen werden. Dadurch treten an den Befestigungselementen im Wesentlichen nur Zug- und Druckkräfte auf.

Vorzugsweise ist das Bodenteil an einem feststehendem Teil gelagert, das an einem Sockel oder Pfosten bodenseitig festgelegt ist. Dadurch kann je nach Untergrund eine stabile Befestigung des Halteteils erfolgen, an dem das Bodenteil verschwenkbar gelagert ist. Das feststehende Teil und das Bodenteil können über ein Scharniergelenk miteinander verbunden sein, das je nach den auftretenden Gewichtslasten entsprechend stabil dimensioniert sein kann.

Gemäß einer weiteren Ausgestaltung der Erfindung ist die Neigung des Gestells über die Anker verstellbar. Hierfür können die Anker längenverstellbar ausgebildet sein, um den Neigungswinkel des Gestells durch Verschwenken um die horizontale Achse an dem Bodenteil zu justieren.

Für eine einfache Montage sind zudem die Pfosten in Längsrichtung vorzugsweise verschiebbar an einem mit dem Anker verbundenen Halteteil gelagert. Das Halteteil kann dann endseitig auf den Pfosten aufgeschoben werden, um in der gewünschten Höhe fixiert zu werden. Dadurch können Wärmespannungen vermieden werden. Gerade wenn die Pfosten in größerer Länge eingesetzt werden, beispielsweise über 5 m, ist ein entsprechender Toleranzausgleich durch Verschieben der Pfosten relativ zu dem Halteteil vorteilhaft.

Erfindungsgemäß wird auch ein Verfahren zur Montage einer Solaranlage mit den folgenden Schritten bereitgestellt:
- Fixieren eines Profils an einem bodenseitig festgelegten Bodenteil;
- Aufrichten des Profils durch Verschwenken um eine horizontale Achse, und
- Festlegen eines Halteteils im oberen Bereich des Profils und Fixieren des Halteteils durch einen Anker an einem Bauwerk.

Durch das erfindungsgemäße Montageverfahren können standardisierte Verfahrensschritte eingesetzt werden, um eine Solaranlage effektiv zu montieren, so dass sich in kurzer Zeit auch große Flächen befestigen lassen. Insbesondere kann durch die verschwenkbare Lagerung des Gestells auch eine entsprechende Ausrichtung und flexible Anpassung an unterschiedliche Gegebenheiten durch Bodenbeschaffenheit und/oder Gebäudegeometrien vorgenommen werden. Auch eine nachträgliche Montage einer Solaranlage an einem bestehendem Bauwerk, wie der Wand oder Fassade eines Gebäudes ist problemlos möglich.

Vorzugsweise werden mehrere Profile über Querstreben zur Bildung eines Gestells miteinander verbunden, bevor die Profile aufgerichtet werden. Dadurch kann am Boden eine Montage des mit Solarmodulen zu belegenden Gestells vorgenommen werden, das dann als Einheit aufgerichtet wird, was eine Montage in großen Höhen vermeidet. Dabei kann das Gestell in einem Zwischenschritt beabstandet vom Boden positioniert werden, um die Solarmodule mechanisch zu fixieren und miteinander zu verkabeln. Dann kann das Gestell auch mit montierten Solarmodulen aufgerichtet werden, so dass bodenseitig eine vollständige Montage des Gestells mit den darauf angeordneten Solarmodulen erfolgt, die dann als Einheit aufgerichtet werden und dann lediglich in der gewünschten Position an einem Gebäude oder anderen Bauwerk festgelegt werden.

Die Erfindung wird nachfolgend anhand mehrerer Ausführungsbeispiele mit Bezug auf die beigefügten Zeichnungen näher erläutert. Es zeigen:
- Figur 1: eine perspektivische Ansicht eines erfindungsgemäßen Montagesystems für Solarmodule;
- Figur 2: eine Seitenansicht des Montagesystems der Figur 1;
- Figuren 3A und 3B: zwei Ansichten eines Bodenteils des Montagesystems;
- Figuren 4A bis 4C: mehrere Ansichten modifizierter Bodenteile für ein Montagesystem;
- Figuren 5A und 5B: zwei Ansichten eines weiteren Ausführungsbeispieles eines Bodenteils;
- Figur 6: eine perspektivische Ansicht eines Ankers des Montagesystems der Figur 1;
- Figuren 7A bis 7C: mehrere Ansichten einer weiteren Ausführungsform eines Ankers für ein Montagesystem;
- Figuren 8A bis 8C: mehrere schematische Ansichten des Montagesystems der Figur 1 bei der Montage;
- Figur 9: eine Draufsicht auf ein Gebäude mit mehreren montierten Solarmodule;
- Figur 10: eine Detailansicht eines längenverstellbaren Ankers, und
- Figur 11: eine Detailansicht eines längenverstellbaren Ankers mit modifiziertem Verstellmechanismus.

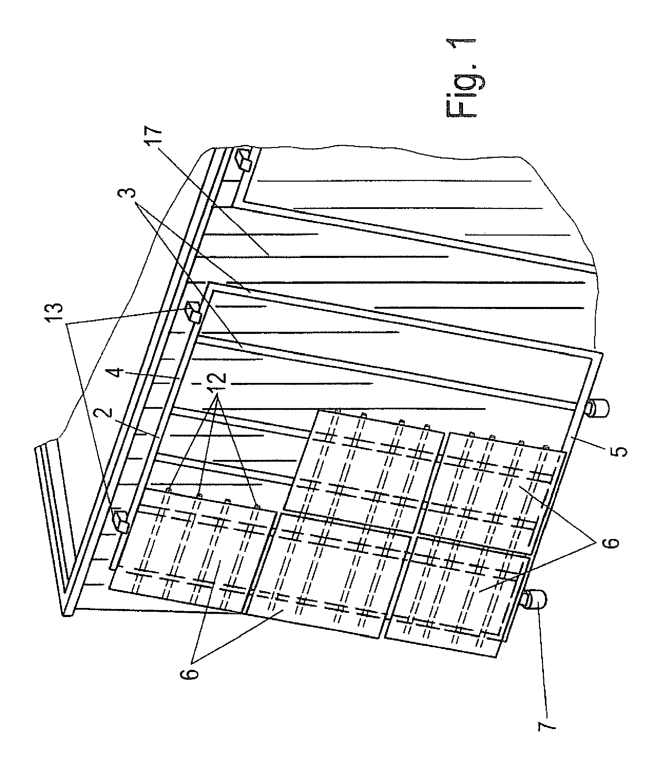

Ein Montagesystem 1 für Solarmodule umfasst ein Gestell 2, das aus nach oben gerichteten Profilen 3 und horizontalen Profilen 4 und 5 besteht, wobei in Figur 1 lediglich ein oberes horizontales Profil 4 und ein unteres horizontales Profil 5 gezeigt sind. Im mittleren Bereich können noch weiteren horizontale Profile angeordnet sein. An dem Gestell 2 sind ein oder mehrere Solarmodule 6 festgelegt, die über leistenförmige Befestigungsmittel 12 an dem Gestell 2 gehalten sind,

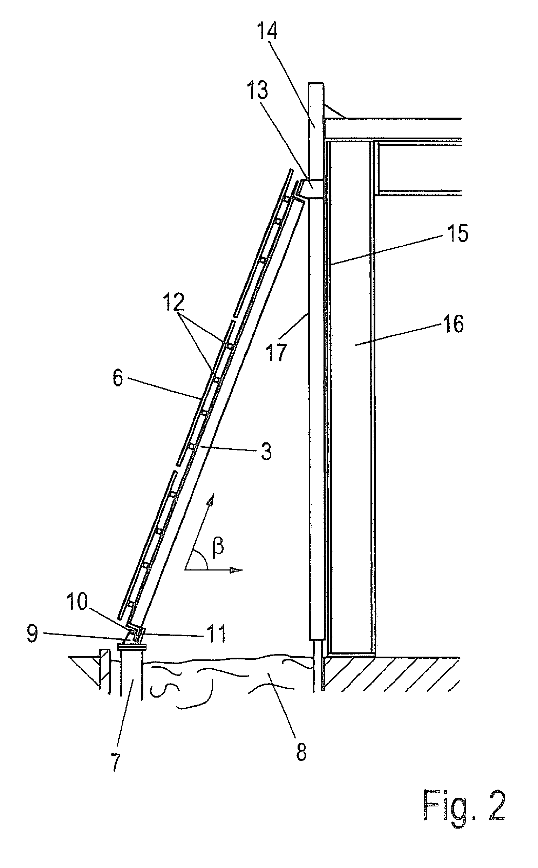

Das Gestell 2 ist bodenseitig durch eine Unterkonstruktion abgestützt, welche die Gewichtslasten des Gestells 2 mit den Solarmodulen 6 nahezu vollständig abträgt. Die Unterkonstruktion umfasst ein Bodenteil 11 und ein feststehendes Teil 9, das an einem Rammpfosten 7 festgelegt ist, der im Erdreich 8 verankert ist (Figur 2).

Im oberen Bereich ist das Gestell 2 an beabstandeten Stellen über schematisch dargestellte Anker 13 an einer Wand 17 bzw. Fassade eines Gebäudes festgelegt. Das Gestell 2 kann sich auch über größere Höhen, beispielsweise über 4 m und höher, erstrecken und an Wänden von Industriehallen montiert werden. Um einen optimalen Neigungswinkel β entsprechend der örtlichen Gegebenheiten zu erhalten, ist das Bodenteil beabstandet von der Wand 17 des Gebäudes angeordnet, wobei der Neigungswinkel beispielsweise in einem Bereich zwischen 60° und 80° liegt. Die Wand 17 des Gebäudes umfasst eine Isolierung 14, die benachbart zu einer Innenwand 15 angeordnet ist. Im Innenbereich ist ein Pfosten 16 angeordnet, der für die Statik notwendig ist und an dem ein Anker 13 festgelegt werden kann. Es ist möglich, im Innenbereich ein Gegenlager für die Anker 13 vorzusehen.

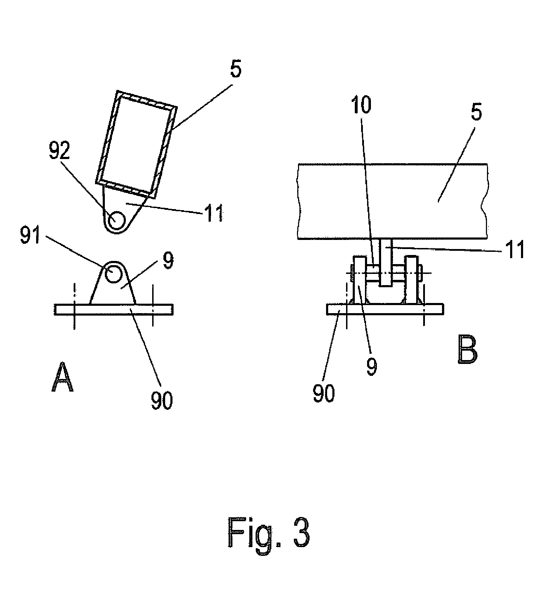

In den Figuren 3A und 3B ist ein Bodenteil 11 gezeigt, das als Lasche ausgebildet ist, die an einer bodenseitigen Querstrebe 5 verschweißt ist. Das Bodenteil 11 umfasst eine Öffnung 92, durch die eine Achse 10 durchgesteckt werden kann. Zur schwenkbaren Lagerung des Bodenteils 11 ist ein feststehendes Teil 9 vorgesehen, das aus zwei Laschen gebildet ist, die ebenfalls eine Öffnung 91 zum Durchstecken der Achse 10 aufweisen. Die beiden Laschen sind über eine Montageplatte 90 miteinander verbunden und dort verschweißt. Die Montageplatte 90 kann auf einem Sockel, beispielsweise aus Beton, oder einem Pfosten fixiert werden.

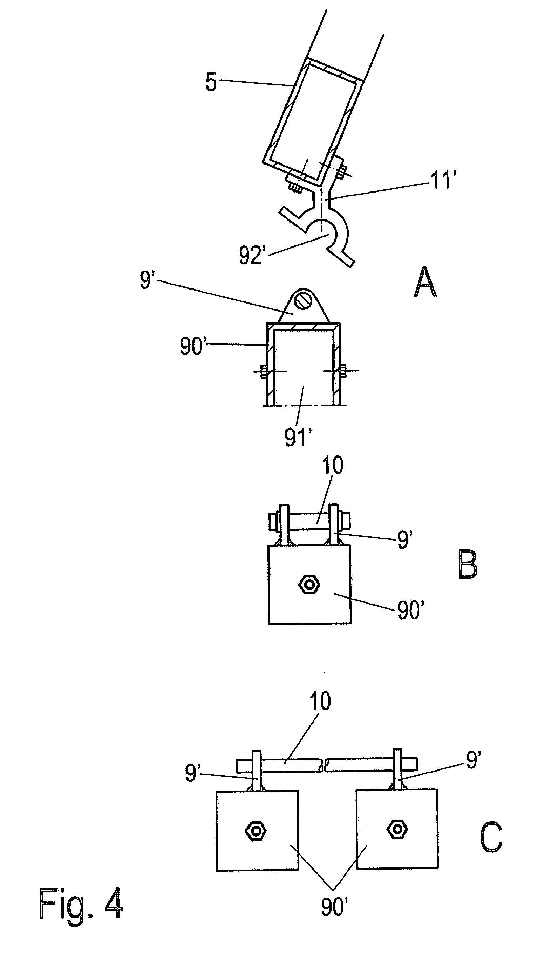

In Figur 4A ist ein modifiziertes Bodenteil 11' gezeigt, das an der unteren Querstrebe 5 des Montagesystems 1 verschraubt werden kann. Hierfür umfasst das Bodenteil 11' einen winkelförmigen Abschnitt, der eine Kante der Querstrebe 5 teilweise umgreift. An den Schenkeln des Winkels können entsprechende Schraubverbindungen vorgesehen sein.

Ferner umfasst das Bodenteil 11' eine halbkreisförmige Aufnahme 92', die um eine Achse 10 gelegt werden kann. Die Achse 10 (Figur 4B) ist an zwei Laschen eines feststehenden Teils 9' festgelegt, wobei die Laschen 9' an einem hohlen Aufsatz 90' verschweißt sind. Der Aufsatz 90' weist eine innere Aufnahme 91' auf, die beispielsweise über einen Rammpfosten gesteckt werden kann und mit diesem verschraubt wird.

Wie in Figur 4C gezeigt ist, kann durch Montage mehrerer benachbarter Aufsätze 90' eine relativ lange Achse 10 zwischen zwei feststehenden Teilen 9' gelagert werden. An der Achse 10 kann dann das Bodenteil 11' mit der halbkreisförmigen Aufnahme 92' montiert werden.

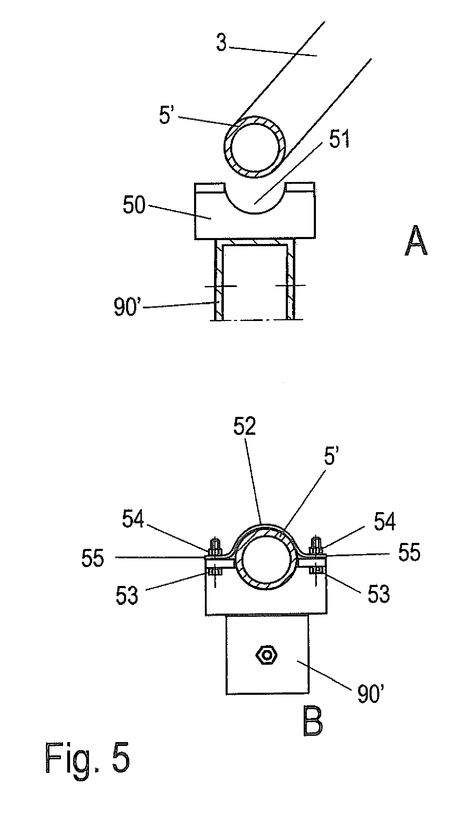

In den Figuren 5A und 5B ist eine weitere Ausführungsform gezeigt, wobei das Gestell 2 als untere Querstrebe 5' ein kreisförmiges Hohlprofil aufweist. Die Querstrebe 5' ist in einer halbkreisförmigen Aufnahme 51 eines Halteteils 50 drehbar gelagert, wobei das Halteteil 50 an einem Aufsatz 90' oder einem anderen Befestigungsmittel bodenseitig fixiert wird. Nach der Montage des Halteteils 50 wird die untere Querstrebe 5' in die Aufnahme 51 eingefügt und anschließend mit Bändern 52 gesichert, die über Befestigungsmittel 53 an dem Halteteil 50 fixiert werden.

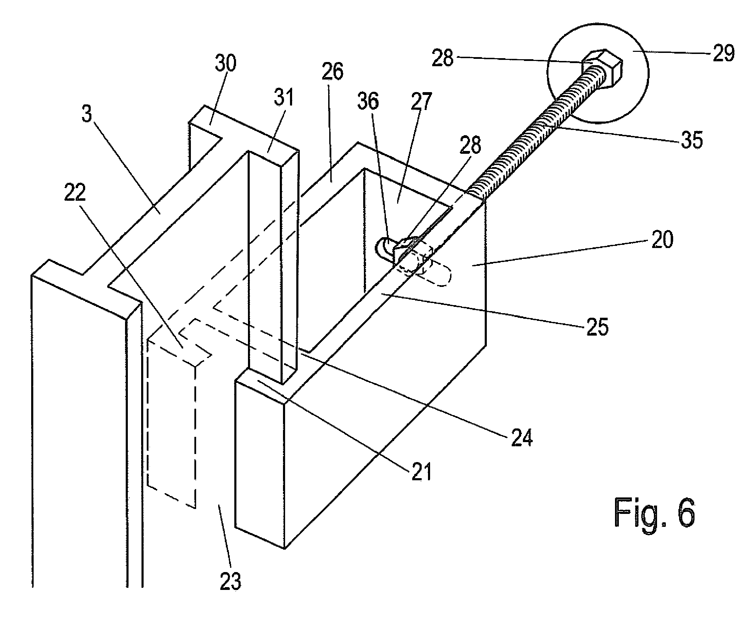

In Figur 6 ist die Halterung für einen sich nach oben im Neigungswinkel β erstreckenden Pfosten 3 dargestellt, der als Doppel-T-Profil ausgebildet ist und entsprechend an gegenüberliegenden Seiten jeweils zwei seitlich hervorstehende Stege 30 und 31 umfasst, die über einen Mittelsteg 32 miteinander verbunden sind. Das Profil 3 ist gegenüber einem Halter 20 verschiebbar gelagert, der U-förmig ausgebildet ist und zwei Schenkel 25 und 26 aufweist, die an einem Boden 27 miteinander verbunden sind. Um das Profil 3 verschiebbar zu lagern, sind an den Schenkeln 25 und 26 nach innen gerichtete Stege 21 und 22 sowie ein Verbindungssteg 24 ausgebildet, die die Stege 30 und 31 an dem Profil 3 umgreifen. Der Mittelsteg 32 ist durch einen Schlitz 23 zwischen den Stegen 21 und 22 durchgeführt. Dadurch kann das Profil 3 in Längsrichtung verschoben werden, ist im Übrigen aber an dem Halter 20 festgelegt.

Am Boden 27 ist ein als Gewindestab ausgebildeter Anker 35 vorgesehen, der an einem Pfosten 16 des Gebäudes oder an einem anderen Bauteil des Gebäudes oder Bauwerkes fixiert ist. An einer Wanddurchführung ist eine Dichtung 29 über eine Mutter 28 an dem Anker 35 fixiert. Der Halter 20 ist ebenfalls über Muttern 28 in der gewünschten Position fixiert. Hierfür ist ein horizontales Langloch 36 im Boden 27 ausgebildet. Durch das horizontale Langloch 36 kann eine horizontale Verstellung des Halteteils relativ zu dem an der Wand festgelegten Anker 35 vorgenommen werden, so dass bei der Befestigung des Profils 3 eine Ausrichtung sowohl in horizontale Richtung parallel zur Wand als auch senkrecht zur Wand erfolgen kann, wenn das Halteteil 20 über zwei Muttern 28 festgelegt ist. Der Anker 35 kann dabei auch zur Horizontalen geneigt an dem Bauwerk fixiert sein, damit Anker 35 und das Profil im Wesentlichen rechtwinklig zueinander ausgerichtet sind.

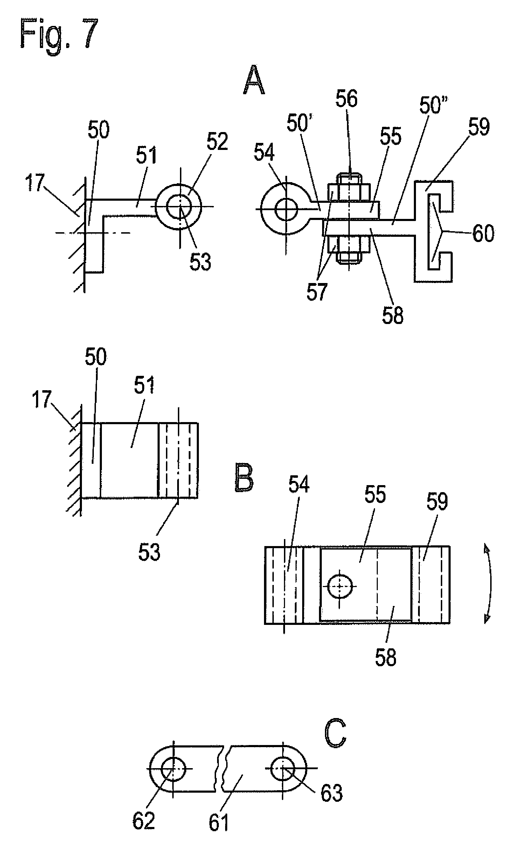

In den Figuren 7A bis 7C ist eine weitere Ausgestaltung eines mehrteiligen Halteelementes gezeigt, um ein Gestell 2 an einer Wand 17 eines Gebäudes festzulegen. Ein erstes Ankerteil 50 ist an einer schematisch dargestellten Wand 17 festgelegt und umfasst einen hervorstehenden Abschnitt 51, an dem eine Hülse 52 zur Ausbildung einer Drehachse 53 angeordnet ist. An der Hülse 52 ist über eine nicht dargestellte Achse eine zweite Hülse 54 eines zweiten Ankerteils 50' festgelegt, das auf der gegenüberliegenden Seite eine Hülse 55 aufweist, die von einer Achse 56 durchgriffen ist. An der Achse 56 ist eine Hülse 58 eines dritten Ankerteils 50" fixiert, die ebenfalls von der Achse 56 durchgriffen ist, wobei das zweite Ankerteil 50' und das dritte Ankerteil 50" über Muttern 57 an der Achse 56 aneinander gesichert sind. An dem dritten Ankerteil 50" ist ein Führungselement 59 mit Nuten 60 zum Einfügen eines Abschnittes eines Profils 3 angeordnet.

Die Fixierung der Hülsen 52 und 54 kann wie bei den Hülsen 55 und 58 erfolgen, so dass das dritte Ankerteil 50" sowohl um eine horizontale Achse als auch um eine vertikale Achse verschwenkbar an dem ersten Ankerteil 50 gelagert ist. Zudem kann zwischen der Hülsen 52 und der Hülse 54 ein Verlängerungselement 61 eingesetzt werden, das an gegenüberliegenden Enden Öffnungen 62 und 63 aufweist, in die entsprechende Achsen eingesteckt werden können.

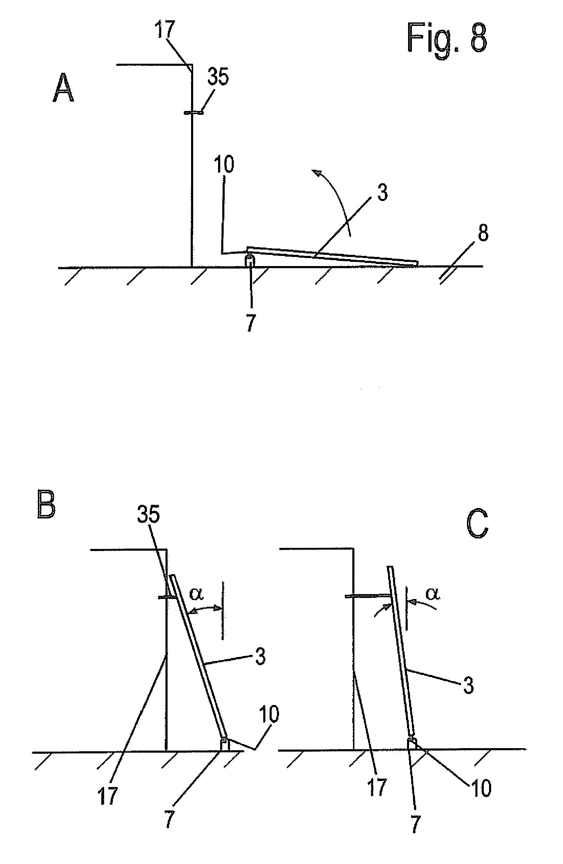

In den Figuren 8A bis 8C ist die Montage eines erfindungsgemäßen Montagesystems schematisch dargestellt. In Figur 8A ist bodenseitig ein Rammpfosten 7 im Erdreich 8 montiert, an dem ein feststehendes Teil 9 des Bodenteils fixiert ist. An einem um eine Achse 10 verschwenkbar gelagerten Halteteil 11 ist ein Profil 3 festgelegt, das am Boden liegt und am Boden mit anderen Profilen 3 durch horizontale Profile 4 und 5 zu einem Gestell 2 verbindbar ist. Das Gestell 2 kann dann beabstandet von dem Boden in einer Zwischenposition positioniert werden, um die Solarmodule 6 an dem Gestell 2 zu montieren. Ferner werden an einer Wand 17 des Gebäudes die notwendigen Anker 35 festgelegt.

Anschließend werden die Pfosten 3, wahlweise einzeln oder zusammen mit dem Gestell 2, nach oben verschwenkt. Danach wird ein Halteteil 20, 20' oder das dritte Ankerteil 59' auf das Profil 3 geschoben und an dem Anker 35 festgelegt. Dabei ist der Pfosten 3 und somit auch die Solarmodule 6 in einem Winkel α zur Vertikalen geneigt angeordnet. Der Neigungswinkel α kann abhängig von der Jahreszeit etwas größer oder kleiner gewählt werden, vorzugsweise zwischen 60 und 80°.

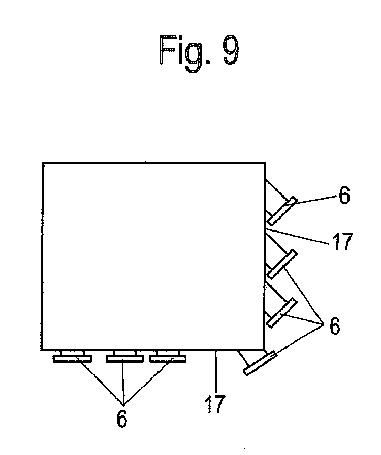

In Figur 9 ist ein Gebäude mit mehreren montierten Solarmodulen 6 auf den erfindungsgemäßen Montagesystemen schematisch gezeigt. Da das Gestell 2 am Bodenteil verschwenkbar gelagert ist, kann der Neigungswinkel α eingestellt werden. Zudem ist es auch möglich, die Solarmodule 6 winklig zur Ebene einer Wand 17 des Gebäudes auszurichten, wie dies auf dem rechten Teil der Darstellung gezeigt ist. Hierfür wird beispielsweise ein mehrteiliger Anker 50, 50' und 50" eingesetzt, der eine entsprechende optimierte Ausrichtung zur Befestigung der Solarmodule 6 ermöglicht.

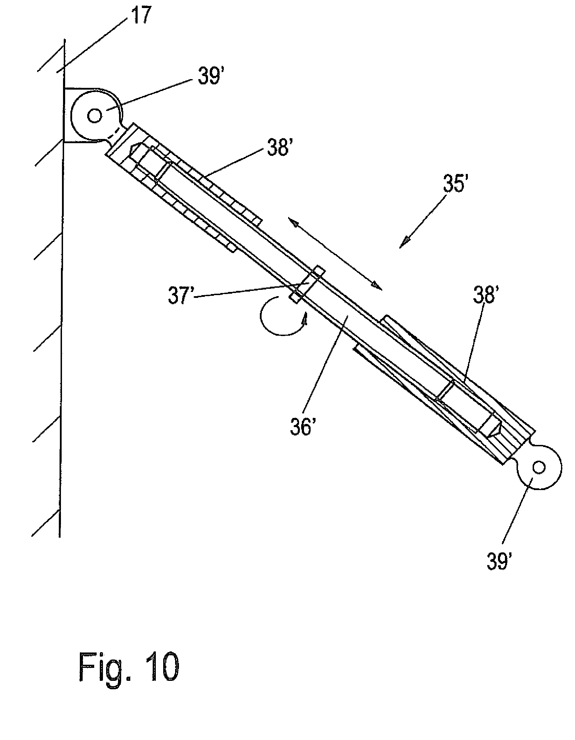

In Figur 10 ist schematisch ein längenverstellbarer Anker 35' gezeigt, bei dem ein stangenförmiges Gewindeteil 36' mittig mit einem Werkzeugansatz 37' versehen ist und auf gegenüberliegenden Seiten in eine Hülse 38' eingedreht ist. An der Hülse 38' ist ein Anbindungspunkt 39' vorgesehen, damit der Anker 35' an einer Wand 17 eines Gebäudes bzw. mit einem Halter 20, 20' oder 40 verbunden werden kann. Durch die Längenänderung des Ankers 35' kann der Neigungswinkel der Solarmodule verstellt werden.

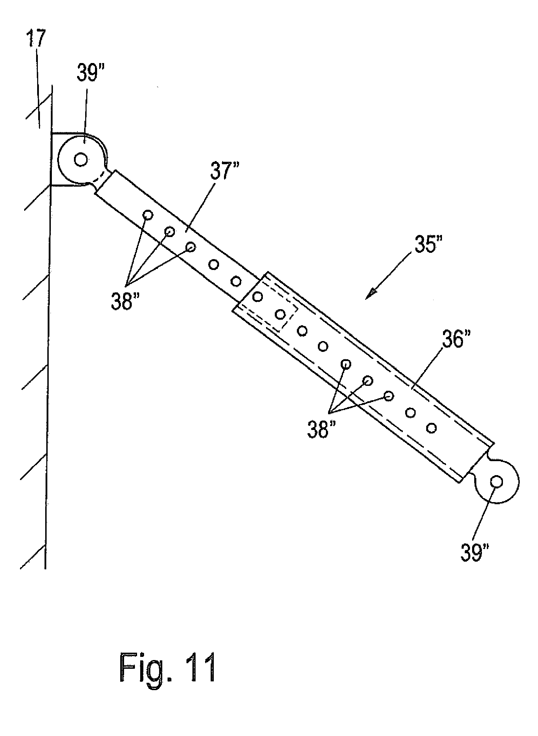

In Figur 11 ist eine modifizierte Ausgestaltung eins Ankers 35" gezeigt, der ebenfalls in der Länge verstellbar ist. Hierfür greift ein Stab 37" in eine Hülse 36" ein, wobei sowohl in dem Stab 37" als auch in der Hülse 36" Öffnungen 38" ausgebildet sind, die dann durch entsprechende Stifte zur Fixierung durchgriffen werden können. An dem Stab 37" ist ein Anknüpfungspunkt 39" zur Verbindung an einer Wand 17 ausgebildet und gleichermaßen ist ein Anknüpfungspunkt 39" zur Verbindung an einem Halteteil 20 an der Hülse 36" ausgebildet.

In den dargestellten Ausführungsbeispielen werden die Halteteile 20, 20', 59 jeweils an einem Profil 3 montiert, das verschiebbar gelagert ist. Es ist natürlich auch möglich, an dem Gestell 2 zusätzliche Bauteile zu montieren, die eine verschiebbare Lagerung relativ zu einem feststehenden Anker ermöglichen.

## Patentansprüche

1. Montagesystem (1) für Solarmodule (6), mit einer Unterkonstruktion (7, 9, 11), an der ein Gestell (2) abgestützt ist, auf dem ein oder mehrere plattenförmige Solarmodule (6) gehalten sind, und einem Anker (13, 35), der an einem Bauwerk festlegbar ist und das Gestell (2) in einem oberen Bereich abstützt, **dadurch gekennzeichnet, dass** das Bodenteil (11) um eine horizontale Achse (10) drehbar gelagert ist und das Gestell (2) in unterschiedlichen Neigungswinkeln fixierbar ist.

2. Montagesystem nach Anspruch 1, **dadurch gekennzeichnet, dass** die Gewichtslasten des Gestells (2) und der Solarmodule (6) im Wesentlichen über die Unterkonstruktion abgetragen werden.

3. Montagesystem nach Anspruch 1 oder 2, **dadurch gekennzeichnet, dass** das Bodenteil (11) an einem feststehenden Teil (9) gelagert ist, das an einem Sockel oder Pfosten (7) bodenseitig festgelegt ist.

4. Montagesystem nach Anspruch 3, **dadurch gekennzeichnet, dass** das feststehende Teil (9) und das Bodenteil (11) über ein Scharniergelenk miteinander verbunden sind.

5. Montagesystem nach einem der Ansprüche 1 bis 4, **dadurch gekennzeichnet, dass** die Neigung des Gestells (2) gegenüber der Horizontalen über die Anker (13, 35) oder Halteteile (20, 20' 61) verstellbar ist.

6. Montagesystem nach einem der Ansprüche 1 bis 5, **dadurch gekennzeichnet, dass** die Pfosten (3) in Längsrichtung verschiebbar an einem mit dem Anker (13, 35) verbundenen Halteteil (20) gelagert sind.

7. Verfahren zur Montage einer Solaranlage, mit den folgenden Schritten:
- Fixieren eines Profils (3) an einem bodenseitig festgelegten Bodenteil (11);
- Aufrichten des Profils (3) durch Verschwenken um eine horizontale Achse (10), und
- Festlegen eines Halteteils (20) im oberen Bereich des Profils (3) und Fixieren des Halteteils (20) durch einen Anker (13, 35) an einem Bauwerk.

8. Verfahren nach Anspruch 7, **dadurch gekennzeichnet, dass** mehrere Profile (3) über Querstreben (4, 5) zur Bildung eines Gestells (2) miteinander verbunden werden, bevor die Profile (3) aufgerichtet werden.

9. Verfahren nach Anspruch 8, **dadurch gekennzeichnet, dass** das Gestell (2) in eine Zwischenposition beabstandet vom Boden verschwenkt und dort abgestützt wird, um die Solarmodule (6) zumindest teilweise zu montieren.

10. Verfahren nach Anspruch 9, **dadurch gekennzeichnet, dass** das Gestell (2) mit montierten Solarmodulen (6) aufgerichtet wird.
